# EUROPEAN PATENT APPLICATION

(11) **EP 4 505 877 A1**
(43) Date of publication of application: **12.02.2025**
(21) Application number: 23784697.7
(22) Date of filing: 30.03.2023
(51) Int. Cl.: A23L 2/00, A23F 5/24, A23L 3/365

(54) **METHOD FOR PRODUCING BEVERAGE**

(30) Priority: 08.04.2022 JP 2022064260
(71) Applicant: Suntory Holdings Limited, Osaka-shi, Osaka 530-8203 (JP)
(72) Inventor: FUNAKURA, Yosuke, Shibukawa-shi, Gunma 377-0004 (JP); TOMITA, Yutaka, Tokyo 135-8631 (JP)
(74) Representative: Vossius & Partner Patentanwälte Rechtsanwälte mbB
(86) International application number: PCT/JP2023/013166
(87) International publication number: WO 2023/195410

(57) **Abstract**

Disclosed is a method for producing a beverage including thawing a raw material 1 in a frozen form, in which the thawing includes introducing water vapor into a thawing chamber 10 after the raw material 1 in the frozen form is disposed in the thawing chamber 10.

## Description

### Technical Field

The present invention relates to a method for producing a beverage including thawing a raw material in a frozen form.

### Background Art

In the production of beverages, some or all of raw materials may be stored in a frozen form for the purpose of maintaining the quality of the raw materials. In such a case, it is necessary to provide a thawing step of thawing the raw material in the frozen form, and various methods have been proposed.

For example, JP 2007-330140 A (Patent Document 1) discloses a thawing apparatus provided with a pulverizing device and a heating container. In the thawing apparatus of Patent Document 1, a large-sized frozen food block stored in a drum or the like is crushed and then heated and thawed. In addition, JP 2019-205358 A (Patent Document 2) discloses a method of raising the temperature of a material in a frozen form by surrounding the frozen substance with a fluid medium and rapidly thawing the material using heat exchange between the material and the fluid medium. In addition, a method of naturally thawing the raw material at room temperature is also widely used.

### Citation List

### Patent Document

Patent Document 1: JP 2007-330140 A
Patent Document 2: JP 2019-205358 A

### Summary of Invention

### Technical Problem

In particular, a method of naturally thawing a raw material at normal temperature is less likely to impair the flavor and aroma of the raw material, and thus is widely used in the production of beverage products whose flavor and aroma are emphasized. However, since the time required for natural thawing is relatively long and the natural thawing is easily affected by the outside temperature, it may be difficult to make a production plan.

Thus, it is desirable to realize a method for producing a beverage product that can achieve both reduction of the production time of the beverage product and good flavor and aroma.

### Solution to Problem

A method for producing a beverage according to the present invention is a method for producing a beverage, the method including thawing a raw material in a frozen form, in which the thawing includes introducing water vapor into a thawing chamber after the raw material in the frozen form is disposed in the thawing chamber.

Since this configuration includes a thawing step in which the raw material can be thawed in a method in which the flavor and aroma of the raw material are hardly impaired and the time required is relatively short, both reduction of the production time of a beverage product and good flavor and aroma can be achieved.

Preferred aspects of the present invention will be described below. However, the scope of the present invention is not limited by the preferred aspects described below.

In one aspect, a method for producing a beverage according to the present invention preferably further includes uniformizing a temperature of the thawed raw material.

According to this configuration, by uniformizing the temperature of the thawed raw material before the raw material is subjected to the next step, implementation conditions of the next step are uniformized, and the quality of the obtained beverage is easily stabilized.

As one aspect of the method for producing a beverage according to the present invention, it is preferable that in the thawing, the introduction of the water vapor is controlled so that the temperature of the raw material does not exceed a predetermined reference value.

According to this configuration, it is possible to prevent the raw material from being excessively heated in the thawing process. As a result, the flavor and aroma of the raw material are less likely to be lost.

As one aspect of the method for producing a beverage according to the present invention, the raw material is preferably accommodated in a container having a capacity of 20 L or more.

According to this configuration, the frozen raw material received in the state of being accommodated in the container can be subjected to the thawing without opening the container. By using the container having a capacity of 20 L or more, a relatively collective unit of raw material can be handled at a time, so that production efficiency is likely to be increased.

Further features and advantages of the present invention will become more apparent from the following description of exemplary and non-limiting embodiments with reference to the drawings.

### Brief Description of Drawings

FIG. 1 is a schematic view of a thawing chamber according to an embodiment.
FIG. 2 is an example of a temperature change in thawing according to the embodiment.
FIG. 3 is an example of temperature changes in thawing and uniformizing according to the embodiment.

### Description of Embodiments

An embodiment of a method for producing a beverage according to the present invention will be described with reference to the drawings. Hereinafter, an example in which the method for producing a beverage according to the present invention is applied to a method for producing a coffee beverage will be described.

### [Overall configuration of production method]

The method for producing a beverage according to the present embodiment includes thawing a raw material in a frozen form, uniformizing a temperature of the raw material thawed in the thawing, and mixing the raw material whose temperature has been uniformized with another raw material to obtain a product.

In the present embodiment, a raw material of a beverage is supplied in three forms including a frozen form, a powdery form, and a liquid form. Examples of the raw material supplied in the frozen form include a concentrated liquid of an extract component and a concentrated liquid of an aroma component. Examples of the powdery raw material include a pH adjusting agent and milk powder. Examples of the liquid raw material include a flavoring agent.

Among the raw materials in the three forms, the raw materials supplied in the powdery form and the liquid form are directly subjected to the mixing. On the other hand, since the raw material supplied in the frozen form needs to be thawed prior to the mixing, the thawing is provided. In the mixing, a known method performed when a beverage product is produced can be applied, and thus the description thereof will be omitted below.

### [Thawing]

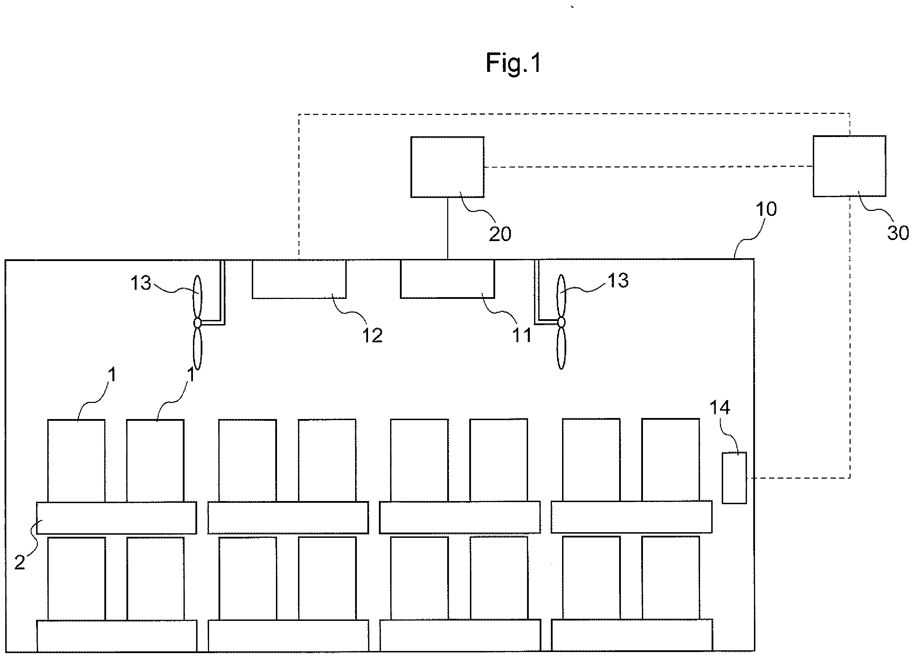

The thawing is a step of thawing the raw material in the frozen form. In the present embodiment, the raw material in the frozen form is accommodated in a drum 1 (an example of a container) having a capacity of 200 L, and a pallet 2 on which the drum 1 is placed is disposed in a thawing chamber 10 and is thawed (FIG. 1). Here, the pallet 2 may be loaded in a vertical direction.

The thawing chamber 10 is provided with a vapor blowing port 11, an air conditioner 12, a fan 13, and a thermometer 14. The vapor blowing port 11 is connected to a boiler 20, and water vapor generated by the boiler 20 is introduced through the vapor blowing port 11 into the thawing chamber 10. In the present embodiment, the water vapor blown through the vapor blowing port 11 is discharged downward; however, a discharge direction of the water vapor is not limited. A controller 30 is provided, and the controller 30 controls the operations of the air conditioner 12 and the boiler 20 based on a measurement value of the thermometer 14.

The fan 13 is always operated so that the water vapor blown through the vapor blowing port 11 and the air temperature-controlled by the air conditioner 12 are uniformly diffused into the thawing chamber 10. As shown in FIG. 1, when the fan 13 is provided in a mode of generating lateral wind, a turbulent flow is generated in the thawing chamber 10, whereby the air in the chamber is stirred and the humidity and the temperature become uniform (turbulent flow method). As the configurations of the thawing chamber 10 and the fan 13, in addition to the above-described turbulent flow method, a laminar flow method of generating a laminar flow in the chamber, a rectification method of generating rectified flow by providing a structure for regulating the flow of air together with the fan, and the like can also be adopted. That is, an installation mode of the fan 13 and an air circulation system are not limited as long as the humidity and the temperature in the thawing chamber 10 can be uniformized.

For each component related to the thawing chamber 10 shown in FIG. 1, a known machine, device, or the like can be mounted. For example, the air conditioner 12 may be a known package air conditioner or the like, and the controller 30 may be a known computer. In the present embodiment, the temperature-controlled air blown out of the air conditioner 12 is discharged laterally; however, the discharge direction of the temperature-controlled air is not limited.

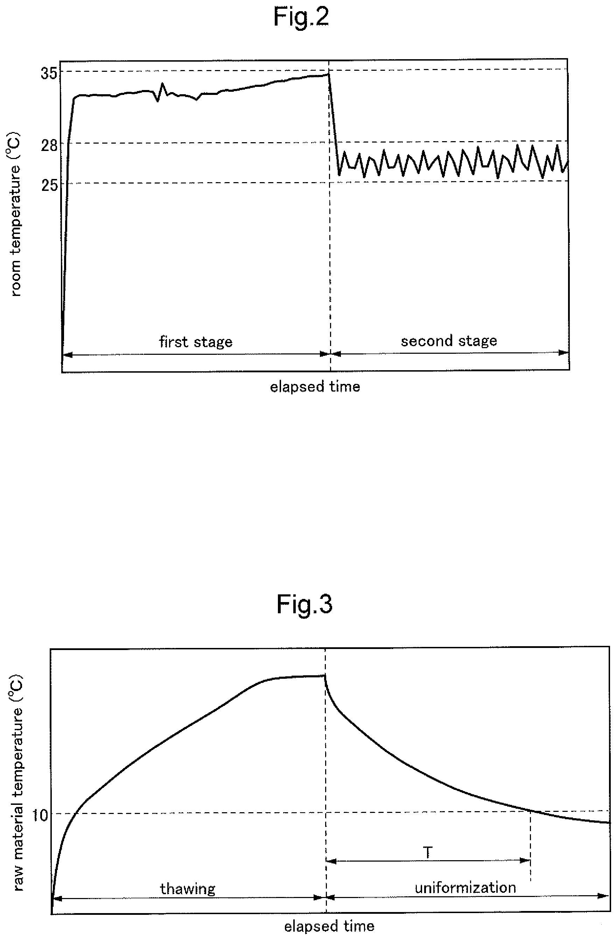

The thawing includes a first stage of roughly thawing the raw material and a second stage of thawing the raw material (completing thawing) to such an extent that the raw material can be subjected to the mixing (FIG. 2). In both the first stage and the second stage, heat for thawing the raw material is provided as latent heat of condensation when water vapor supplied from the boiler 20 is condensed.

In the first stage, after the drum 1 is disposed in the thawing chamber 10, water vapor is introduced into the thawing chamber 10. In the first stage, the controller 30 controls the operations of the air conditioner 12 and the boiler 20 such that the measurement value of the thermometer 14 is maintained in a range not exceeding a predetermined upper limit temperature (for example, 35°C). After a predetermined time (for example, 12 hours) has elapsed from the start of the first stage, the process proceeds to the second stage.

In the second stage, the controller 30 controls the operations of the air conditioner 12 and the boiler 20 such that the measurement value of the thermometer 14 is maintained in a predetermined range (for example, 25°C or higher and 28°C or lower). As in the values exemplified above, since the predetermined range in the second stage is smaller than the predetermined upper limit in the first stage, the progress of thawing in the second stage is slower than the progress of thawing in the first stage. In the second stage, the thawing of the raw material is allowed to proceed, and the room temperature is controlled so that the temperature of the raw material does not exceed a predetermined upper limit temperature (for example, 25°C). The duration of the first stage is set so that the first stage is ended while the temperature of the raw material is at a temperature sufficiently lower than the predetermined upper limit temperature (for example, around 10°C).

As exemplified above, in the present embodiment, the raw material supplied in the frozen form contains the aroma component, and if the temperature of these concentrated liquids is excessively increased, the aroma may be impaired. Thus, in the present embodiment, the upper limit temperature (for example, 25°C) is set within a range in which the aroma of the raw material is not impaired, and control is executed within a range in which the temperature of the raw material does not exceed the upper limit temperature in the second stage. On the other hand, in the first stage where the temperature of the raw material is in a region sufficiently lower than the temperature of the raw material reaching the upper limit temperature, the room temperature is maintained at a relatively high upper limit temperature (for example, 35°C) so that the thawing proceeds quickly. As described above, by providing the first stage of roughly thawing the raw material and the second stage of thawing the raw material so that the temperature of the raw material does not exceed a predetermined upper limit temperature, it is easy to achieve both reduction of the time required for thawing as compared with a known case and guarantee of the quality of the thawed raw material.

### [Uniformization]

The uniformization is a step of uniformizing the temperature of the raw material thawed in the thawing. At the time when the second stage of the thawing is ended, the temperature of the raw material increases to around a predetermined upper limit temperature (for example, 25°C); however, in the uniformization, the raw material is cooled to a predetermined set temperature (for example, 10°C) or lower. Specifically, the operation of the air conditioner 12 is controlled such that the measurement value of the thermometer 14 decreases, and cold air is supplied into the thawing chamber 10. The control condition is set such that a time T required from the start of the uniformization to cooling of the raw material to the set temperature or lower is within a predetermined time (for example, 24 hours) (FIG. 3).

The raw material thawed in the thawing is thawed to such an extent that the raw material can be subjected to the mixing, and it is also possible to proceed to the mixing without providing the uniformization. However, since the raw material is heated to around a predetermined upper limit temperature (for example, 25°C) in the thawing, the temperature of the raw material may vary inside the drum 1. Thus, by uniformizing the temperature of the raw material and then subjecting the raw material to the mixing, the implementation conditions of the mixing are uniformized, and the quality of the resulting beverage is easily stabilized.

### [Other Embodiments]

Finally, another embodiment of the method for producing a beverage according to the present invention will be described. Note that the configuration described in each of the following embodiments can also be applied in combination with the configuration described in another embodiment as long as no contradiction arises.

In the above embodiment, the production method including the thawing, the uniformization, and the mixing has been described as an example. However, the steps included in the method for producing a beverage according to the present invention are not limited as long as the steps include the thawing including introducing water vapor into the thawing chamber after placing the raw material in the frozen form in the thawing chamber. For example, the uniformization may be omitted from the above embodiment, and the mixing may be performed immediately after the thawing is completed. In addition, a known step typically employed as a step of producing a beverage, such as filtration and squeezing, may be provided.

In the above embodiment, an example has been described in which the uniformizing the temperature of the raw material is provided by the method of cooling the raw material to a predetermined set temperature or lower. However, when the method for producing a beverage according to the present invention includes uniformizing the temperature of the thawed raw material, the implementation method is not limited. For example, performing the thawing so that the thawing proceeds in a mode in which the temperature of the raw material is uniform by appropriately adjusting the embodiment (arrangement of raw materials, heating method, etc.) of the thawing also corresponds to uniformizing the temperature of the thawed raw material. When the raw material is stored in a space temperature-controlled to a constant temperature and the temperature is uniformized as in the above embodiment, a magnitude relationship between the heating temperature in the thawing and the storage temperature for uniformization is not limited.

In the above embodiment, the example in which the method for producing a beverage according to the present invention is applied to the method for producing a coffee beverage has been described. However, the beverage produced by the method for producing a beverage according to the present invention may be a fruit juice beverage, a tea beverage, or the like in addition to coffee.

In the above embodiment, in the example in which the method for producing a beverage according to the present invention is applied to the method for producing a coffee beverage, the concentrated liquid of the extraction component is exemplified as the raw material supplied in the frozen form. However, in the method for producing a beverage according to the present invention, the frozen raw material to be thawed in the thawing is not limited, and may be, for example, fruit juice, milk, or the like. The raw material may contain a solid component such as pulp, as long as the raw material can be supplied in the frozen form.

In the method for producing a beverage according to the present invention, various conditions for performing the thawing are not limited to the above example. For example, a set temperature of the room temperature and the duration can be appropriately selected according to various conditions such as the type and volume of the raw material to be thawed, the type and shape of the container, and the shape and equipment of the thawing chamber.

In the above embodiment, the example in which the first stage and the second stage are provided in the thawing has been described. That is, the above example is an example in which the set temperature of the room temperature is changed once in the thawing. However, as the method for producing a beverage according to the present invention, in the method for producing a coffee beverage, the set temperature of the room temperature in the thawing may not be changed or may be changed a plurality of times.

In the above embodiment, the example in which the drum 1 having a capacity of 200 L is used as the container has been described. However, the capacity of the container is not particularly limited in the present invention. However, when the capacity of the container is 20 L or more, a relatively collective unit of raw material can be handled at a time, and production efficiency is likely to be increased, which is preferable. The capacity of the container is more preferably 50 L or more, and still more preferably 100 L or more. The capacity of the container is preferably 200 L or less.

Also, with respect to other configurations, it should be understood that the embodiments described in the present specification are illustrative in all respects and that the scope of the present invention is not limited thereto. It will be easily understood by those skilled in the art that appropriate modifications can be made without departing from the spirit of the present invention. Accordingly, other embodiments modified without departing from the spirit of the present invention are naturally included in the scope of the present invention.

### Examples

Hereinafter, the present invention will be further described with reference to examples. However, the following examples do not limit the present invention.

### [Test 1: Comparison of time required for thawing]

100 L of concentrated liquid of coffee was sealed in a drum and completely frozen. The concentrated liquid is accommodated in the drum in a state of being sealed in an inner bag.

In Example 1, the above drum was thawed according to the thawing of the embodiment. That is, as the conditions in the first stage, a room temperature upper limit temperature was 35°C and the duration was 12 hours, and as the conditions in the second stage, a room temperature control temperature was 25°C or higher and 28°C or lower and the duration was 12 hours.

In Comparative Example 1, the above-described drum was stored for 72 hours in a warehouse maintained at 25°C. The thawing method of Comparative Example 1 is so-called natural thawing.

In each example, a thermocouple was placed in contact with an upper side surface of the inner bag, and the temperature was continuously measured. This measurement value was taken as the temperature of the concentrated liquid . Thawing was determined to be complete when the temperature of the concentrated liquid exceeded 15°C. For each example, two drums were tested, and an average value of the temperatures for the two drums was taken as the measurement value.

For each example, a relationship between an elapsed time from the start of thawing and the temperature of the concentrated liquid in the drum is listed in Table 1. In Example 1, the temperature of the concentrated liquid reached 17.9°C at 15 hours after the start of thawing, and it could be said that the concentrated liquid was completely thawed at that point. Since thawing was complete at 15 hours and 18 hours after the start of thawing in Example 1, no subsequent temperature measurement was performed. On the other hand, in the comparative example, the thawing was not completed at 24 hours and 48 hours after the start of the thawing, and the thawing was completed at 72 hours after the start of the thawing. That is, in the thawing method according to the above embodiment, the thawing could be completed earlier than that in the natural thawing.

**Table 1: Comparison of time required for thawing**

| [Table 1] | | | | | | | | |
|---|---|---|---|---|---|---|---|---|
| | | Elapsed time [hours] | | | | | | |
| | | 9 | 12 | 15 | 18 | 24 | 48 | 72 |
| Temperature of concentrated liquid [°C] | EXAMPLE 1 | 12.7 | 13.1 | 17.9 | 19.5 | - | - | - |
| | COMPARATIVE EXAMPLE 1 | 2.9 | 3.4 | 4.0 | 4.2 | 3.0 | 3.5 | 16.0 |

### [Test 2: Difference in aroma of coffee depending on thawing method]

A concentrated liquid of a coffee aroma component (the same as in Test 1) sealed in a drum in the frozen form was thawed, coffee was prepared using the concentrated liquid, and a tasting evaluation was performed by 10 monitors.

### (Thawing)

In Examples 2 and 3, the thawing was performed according to the thawing of the embodiment. That is, as the conditions in the first stage, the room temperature upper limit temperature was 35°C and the duration was 12 hours, and as the conditions in the second stage, the room temperature control temperature was 25°C or higher and 28°C or lower and the duration was 12 hours.

In Comparative Example 2, thawing was performed by the method of Comparative Example 1 described above. That is, the drum was stored for 72 hours in a warehouse maintained at 25°C. The thawing method of Comparative Example 2 is so-called natural thawing.

### (Uniformization)

In Example 2, after the thawing was ended, the room temperature was maintained at 25°C for 12 hours, and then the raw material was immediately subjected to the mixing. In Example 3, after the thawing was ended, the room temperature was maintained at 25°C for 12 hours, the room temperature was further maintained at 15°C for 12 hours, and then the raw material was subjected to the mixing.

In Comparative Example 2, the raw material was immediately subjected to the mixing after the thawing was ended.

### (Evaluation)

A tasting evaluation was performed by 10 monitors in Examples 2 and 3 and Comparative Example 2. Each monitor scored the flavor and the aroma of each example of examples and comparative examples with the full score being 5 points, an average score of 10 monitors was used as an evaluation score of each example, and those having 4 points or more were determined as pass. As listed in Table 2, in each of Examples 2 and 3, the evaluation score was 4 points or more, and the evaluation was determined as pass. That is, by the thawing method according to the above embodiment, it is possible to reduce the time required for thawing and to achieve a quality level as before.

**Table 2: Tasting evaluation of examples and comparative examples**

| [Table 2] | | | |
|---|---|---|---|
| | Example 2 | Example 3 | COMPARATIVE EXAMPLE 2 |
| Total required time [hours] | 36 | 48 | 72 |
| Pass/fail | Pass | Pass | Pass |

### Industrial Applicability

The present invention can be used, for example, when a raw material is thawed in a coffee beverage production process.

### Reference Signs List

1: drum
2: pallet
10: thawing chamber
11: vapor blowing port
12: air conditioner
13: fan
14: thermometer
20: boiler
30: controller

## Claims

1. A method for producing a beverage, the method comprising thawing a raw material in a frozen state,
wherein the thawing includes introducing water vapor into a thawing chamber after the raw material in the frozen state is disposed into the thawing chamber.

2. The method for producing a beverage according to claim 1, further comprising uniformizing a temperature of the thawed raw material.

3. The method for producing a beverage according to claim 1 or 2, wherein during the thawing, the introduction of the water vapor is controlled in such a way that the temperature of the raw material does not exceed a predetermined reference value.

4. The method for producing a beverage according to claim 1 or 2, wherein the raw material is accommodated in a container having a capacity of 20 L or more.
